**Europäisches Patentamt**

**European Patent Office**

**Office européen des brevets**

(19)

(11) Veröffentlichungsnummer : **0 395 872 B1**

# EUROPÄISCHE PATENTSCHRIFT

(12)

(45) Veröffentlichungstag der Patentschrift :
**16.12.92 Patentblatt 92/51**

(51) Int. Cl.$^5$ : **C09C 1/24,** C04B 14/30

(21) Anmeldenummer : **90105513.7**

(22) Anmeldetag : **23.03.90**

(54) **Eisenoxidschwarzpigmentgranulate, Verfahren zu ihrer Herstellung sowie deren Verwendung.**

(30) Priorität : **04.04.89 DE 3910779**

(43) Veröffentlichungstag der Anmeldung :
**07.11.90 Patentblatt 90/45**

(45) Bekanntmachung des Hinweises auf die
Patenterteilung :
**16.12.92 Patentblatt 92/51**

(84) Benannte Vertragsstaaten :
**DE FR GB IT NL**

(56) Entgegenhaltungen :
**US-A- 3 843 380**

(73) Patentinhaber : **BAYER AG
W-5090 Leverkusen 1 Bayerwerk (DE)**

(72) Erfinder : **Rademachers, Jakob, Dr.
Hoeninghausstrasse 34
W-4150 Krefeld 12 (DE)**
Erfinder : **Bockelmann, Wolfgang, Dr.
Bodelschwinghstrasse 32
W-4150 Krefeld (DE)**
Erfinder : **Gauler, Klaus, Dr.
Deswatinesstrasse 93
W-4150 Krefeld 1 (DE)**

EP 0 395 872 B1

**Beschreibung**

Die vorliegende Erfindung betrifft handhabungsstabile dispergierhilfsmittelfreie Eisenoxidschwarzpigmentgranulate, Verfahren zu ihrer Herstellung sowie deren Verwendung.

Eisenoxidschwarzpigmente bestehen aus Oxiden des zwei- und dreiwertigen Eisens mit Magnetitstruktur. Ihre Herstellung erfolgt entweder nach dem Ein- oder Zweistufen-Fällungsprozeß aus Eisen II-salzlösungen oder nach dem Anilinverfahren durch Reduktion von Nitrobenzol mit metallischem Eisen (Ullmanns Encyklopädie der techn. Chem., 4. Auflage, Band 18, Seite 603, Verlag Chemie, Weinheim 1979).

Üblicherweise werden die Eisenoxidschwarzpigmente, die im Laufe des Herstellungsprozesses als Zwischenprodukte in wäßriger Phase in Form von Filterkuchen anfallen, nach dem Trocknen je nach Einsatzgebiet mehr oder weniger stark gemahlen. So müssen die Eisenoxidschwarzpigmente, die für die Einfärbung von Lacken oder Kunststoffen verwendet werden, einer intensiveren Mahlung unterworfen werden als jene, die der Betoneinfärbung dienen. Diese werden nur mäßig zu einem Pigmentpulver vermahlen.

Obschon Eisenoxidschwarzpigmente in der Regel heute in dieser Pulverform eingesetzt werden, sind sie doch mit Nachteilen behaftet, da sie zum Stauben neigen und schlecht zu dosieren sind.

Die üblichen Verfahren zur Herstellung von staubfreien Granulaten, z.B. gröbere über Granulierteller oder feinere durch Verdüsen in Sprühtrocknern, führen bei Eisenoxidschwarzpigmenten nur dann zum Erfolg, wenn die Granulatbildung unter Zusatz von Bindemitteln durchgeführt wird, da ansonsten die Granulate keine genügende Festigkeit aufweisen und leicht zerfallen.

Der Zusatz von Bindemitteln wiederum führt zu erheblichen Nachteilen. Je nach Art des Bindemittels wird der Anteil an wasserlöslichen Bestandteilen über das gewünschte Maß erhöht, so daß diese Pigmentgranulate nicht universell einsetzbar sind. Andererseits verschlechtern sie durch ihre Bindekraft das Dispergierverhalten des Pigmentes.

Deshalb wird in der DE-A 3 619 363 vorgeschlagen, für das Einfärben von Beton Pigmentgranulate zu verwenden, denen Dispergierhilfsmittel zugesetzt wurden.

Aufgabe dieser Erfindung ist es, stabile, universell einsetzbare Eisenoxidschwarzpigment-granulate zur Verfügung zu stellen, die die beschriebenen Nachteile nicht aufweisen. Diese Eisenoxidschwarzpigmente sollen in einem ökonomischen Verfahren zugänglich sein.

Diese Aufgabe wurde dadurch gelöst, daß wäßrige Eisenoxidschwarzsuspensionen durch Verdüsen oder Zerstäuben zu Pigmentgranulaten verformt und die erhaltenen Granulate getempert werden. Es hat sich nämlich gezeigt, daß durch die Temperung des Granulats eine Verbesserung der Festigkeit und des Fließverhaltens eintritt. Die Erhöhung der Festigkeit genügt, um die Handhabung der porösen Granulate ohne Zerfallen zu gewährleisten. Andererseits ist die Zunahme der Festigkeit nicht so hoch, daß sie die Dispergierbarkeit, besonders in Beton, in negativer Weise beeinflußt.

Gegenstand dieser Erfindung ist somit ein Verfahren zur Herstellung handhabungsstabiler dispergierhilfsmittelfreier Eisenoxidpigmente durch Verdüsen oder Zerstäuben von Eisenoxidschwarzpigment-Suspensionen, wobei die erhaltenen Eisenoxidschwarzpigment-Granulate getempert werden.

Bevorzugt erfolgt die Temperung bei 400°C bis 800°C, vorzugsweise bei 500°C bis 700°C in schwach reduzierender, inerter oder schwach oxidierender Atmosphäre. Die Eisenoxidschwarzpigment-Suspensionen weisen vorteilhaft einen Feststoffgehalt von 50 bis 75 Gew.-% auf.

Schwach reduzierend im Sinne dieser Erfindung sind Wasserstoffgehalte bis zu 1 Vol-%, schwach oxidierend Sauerstoffgehalte bis zu 3 Vol-%.

Da die benötigten Temperzeiten sehr kurz sind, kann das erfindungsgemäße Verfahren in einem Verfahrensschritt durchgeführt werden. Hierzu bieten sich insbesondere Heißgassprühreaktoren, z.B. Reaktionszyklone, an. Die Temperung in Sprühreaktoren ist bereits bei Verweilzeiten von weniger als 5 sec vollzogen, teilweise in noch wesentlich kürzeren Zeiten, wie kleiner als 1 Sekunde. Aber auch die Aufteilung des erfindungsgemäßen Prozesses in zwei Verfahrenschritte ist denkbar, nämlich die Granulatherstellung aus wäßrigen, 50 bis 75 % Feststoff enthaltenden Suspensionen im speziell ausgelegten Zerstäubungstrockner und die Temperung in einem nachgeschalteten Aggregat, wie z.B. einem Drehrohrofen. Hierbei sind vorteilhaft Verweilzeiten von 5 min bis 1 Stunde, bevorzugt 10 bis 30 min, einzuhalten. Eine längere Verweilzeit wirkt sich prinzipiell nicht negativ aus. Ebenso kann natürlich im beschriebenen Zweistufenverfahren die Temperung durch Blitzkalzination in einer Hochtemperaturkammer erfolgen.

Ein weiterer Vorteil des erfindungsgemäßen Verfahrens besteht darin, daß bei der vorzugsweisen Ausführungsform des Verdüsens und Temperns in einem Schritt in einem Heißgassprühreaktor keine Überhitzung des Pigmentgranulats über die gewünschte Temperatur auftreten kann. Eine Überhitzung wirkt sich bekanntlich negativ auf die Pigmentqualität aus, da infolge der Sinterung die Farbstärke erheblich abfällt.

Besonders gute Ergebnisse werden erreicht, wenn die Granulatbildung im Zerstäubungstrockner über eine Einstoffdüse erfolgt. Mit einer Einstoffdüse lassen sich größere Granulate erzielen als mit der Zweistoffdüse oder mit der Zerstäuberscheibe.

Ist eine Zwischenbunkerung der noch nicht getemperten Granulate erforderlich, so ist der Zusatz eines Bindemittels bei der Granulatherstellung empfehlenswert. Hier werden erfindungsgemäß bevorzugt Bindemittel eingesetzt, die beim anschließenden Temperschritt zerfallen, vorzugsweise Ammoniumsalze der Polyacrylsäure, bevorzugt in Mengen von 0,1 bis 1 Gew.-%. Hierbei ist die Temperung in schwach oxidierender Atmosphäre vorteilhaft.

Obschon Granulate und keine Pulver in der Temperzone vorhanden sind, überrascht es, daß auch hier eine Verbesserung der Pigmentqualität im gleichen Maßstab erreicht wird, wie es in der DE-A 3 620 333 beschrieben wird, nämlich die Verbesserung des Farbtons und der Farbstärke des Schwarzpigmentes.

Werden mikronisierte Pigmente gewünscht, so können ebenso vorteilhaft die erfindungsgemäßen Granulate einer Mahlung unterzogen werden. Es ist demnach keine separate Fertigungsstraße erfoderlich.

Gegenstand der Erfindung sind auch die nach dem erfindungsgemäßen Verfahren erhältlichen Eisenoxidschwarzpigmentgranulate. Die durch Sprühtrocknen erhaltenen Granulate weisen bevorzugt eine Agglomeratgröße von 5 bis 500 µm, vorzugsweise von 100 bis 300 µm auf, je nach Art der Verdüsung und Feststoffkonzentration der eingesetzten Suspension. Je höher der Pigmentgehalt der eingesetzten Suspension, desto größer der Durchmesser der erhaltenen Granulate.

Werden die Suspensionen einem Sprüh-Fließbett-Verfahren unterzogen, beträgt die Größe der Agglomerate 200 bis 5000 µm. Ein Vorteil des erfindungsgemäßen Verfahrens besteht auch darin, daß die erhaltenen Eisenoxidschwarzpigmente universell einsetzbar sind, da sie keinen erhöhten wasserlöslichen Salzgehalt aufweisen.

Ein weiterer Gegenstand der Erfindung besteht in der Verwendung der erfindungsgemäßen Eisenoxidschwarzpigmentgranulate zum Einfärben von Baustoffen, insbesondere Betonteilen, Faserzementteilen, Putzen, Fugenmaterial, Gehwegplattten oder Pflastersteinen.

Das Verfahren der Erfindung soll an folgenden Beispielen näher erläutert werden, es ist darin jedoch keine Einschränkung auf die Beispiele zu sehen.

Im Falle der aufgeführten Beispiele wurde die Bestimmung der Auslaufzeit mit dem DIN-Becher 4 (DIN 53 211 vom April 1974) analog auf die zu prüfenden Pulver angewandt.

Beispiel 1

Eine wäßrige Eisenoxidschwarzsuspension mit 50 Gew.-% Feststoff (Vorprodukt von Bayferrox 120 N, Handelsprodukt der Bayer AG) wurde mit 10 l/h einem Reaktionszyklon über eine mit Stickstoff betriebenen Zweistoffdüse zugeführt. Der Reaktorbrenner wurde mit leichtem Luftunterschuß betrieben. Die Reaktortemperatur betrug 700°C. Das erhaltene Pigment zeigte eine $Fe^{III}/Fe^{II}$-Gewichtsverhältnis von 1,9 bis 2,0, war blaustichiger und farbstärker als Bayferrox 330 (Handelsprodukt der Bayer AG). Die Granulatdurchmesser lagen bei 10 bis 100 µm, die BET-Oberfläche bei 13 m²/g. Die Dispergierbarkeit in Zementmischungen war zufriedenstellend.

Beispiel 2

30 l der wäßrigen Eisenoxidschwarzsuspension aus Beispiel 1 wurden stündlich in einem Zerstäubertrockner über eine Einstoffdüse mit einer Bohrung von 1,1 mm bei einem Vordruck von 4 bar verdüst. Vom Flächenbrenner, der mit Erdgas bei hohem Luftüberschuß betrieben wurde, traten die Rauchgase mit einer Temperatur von 500°C in den Trockner ein. Bei einer Abgastemperatur von 130°C betrug die Pigmenttemperatur etwa 90°C.

Es fielen stündlich 24 kg braunstichige Granulate mit Durchmessern von 150 bis 250 µm an. Der Feuchtigkeits- gehalt lag bei 1 bis 5 Gew.-%. Die Auslaufgeschwindigkeit aus dem 4 mm DIN-Becher betrug 61 Sekunden.

Die erhaltenen Granulate wurden anschließend einem Drehrohrofen mit Abmessung von 2 m Länge und 30 cm Durchmesser zugeführt. Der Ofen wurde indirekt mit Erdgasbrennern beheizt. Die Drehzahl betrug 5 Upm, die Neigung 1,5 %. Im Gegenstrom zu den Granulaten wurde Stickstoff (4 Nm³/h) mit 3,5 Vol-% zugemischter Luft in den Ofen geleitet. Die Maximaltemperatur im Produkt betrug 680°C. Das nach dem Kühlen angefallene Granulat zeigte praktisch die gleiche Durchmesserverteilung auf wie das aufgegebene Produkt. Das Schüttgewicht betrug 0,93 kg/l. In Zementmischungen war die Dispergierfähigkeit gut. Der Farbton war blauer und die Farbstärke höher als das Vergleichspigment Bayferrox 330 (Handelsprodukt der Bayer AG). Die BET-Oberfläche betrug 13 m²/g, das $Fe^{III}/Fe^{II}$-Gewichtsverhältnis lag bei 2. Die Auslaufgeschwindigkeit aus dem 4 mm DIN-Becher betrug nur 53 Sekunden.

**Patentansprüche**

1. Verfahren zur Herstellung handhabungsstabiler dispergierhilfsmittelfreier Eisenoxidschwarzpigmentgranulate durch Verdüsen oder Zerstäuben von Eisenoxidschwarzpigment-Suspensionen, dadurch gekennzeichnet, daß die erhaltenen Eisenoxidschwarzpigmentgranulate getempert wurden.

2. Verfahren gemäß Anspruch 1, dadurch gekennzeichnet, daß die Temperung bei 400 bis 800°C, vorzugsweise bei 500 bis 700°C, in schwach reduzierender, inerter oder schwach oxidierender Atmosphäre durchgeführt wird.

3. Verfahren gemäß einem der Ansprüche 1 oder 2, dadurch gekennzeichnet, daß die Eisenoxidschwarzpigment-Suspension einen Feststoffgehalt von 50 bis 75 Gew.-% aufweist.

4. Verfahren gemäß einem oder mehrerer der Ansprüche 1 bis 3, dadurch gekennzeichnet, daß die Eisenoxidschwarzpigment-Suspension thermoinstabile organische Verbindungen enthält.

5. Verfahren gemäß Anspruch 4, dadurch gekennzeichnet, daß die thermoinstabilen organischen Verbindungen Ammoniumsalze der Polyacrylsäure sind und in Mengen von 0,1 bis 1 Gew.-% zugesetzt werden.

6. Verfahren gemäß einem oder mehreren der Ansprüche 1 bis 5, dadurch gekennzeichnet, daß die Granulatbildung und die Temperung in einem Verfahrensschritt, bevorzugt in einem Heißgassprühreaktor, durchgeführt werden.

7. Verfahren gemäß einem oder mehreren der Ansprüche 1 bis 5, dadurch gekennzeichnet, daß die Granulatbildung und die Temperung in zwei getrennten Verfahrensschritten, bevorzugt die Granulatbildung in einem Zerstäubungstrockner und die Temperung in einem Drehrohrofen, durchgeführt werden.

8. Verfahren gemäß Anspruch 7, dadurch gekennzeichnet, daß die Granulatbildung im Zerstäubungstrockner über eine Einstoffdüse erfolgt.

9. Eisenoxidschwarzpigmentgranulat, erhältlich gemäß einem oder mehreren der Ansprüche 1 bis 8.

10. Verwendung der Eisenoxidschwarzpigmentgranulate gemäß einem oder mehreren der Ansprüche 1 bis 9 zur Einfärbung von Baustoffen, insbesondere Beton.

## Claims

1. A process for the production of handling-stable dispersant-free iron oxide black pigment granules by spraying or spray-drying of iron oxide black pigment suspensions, characterized in that the iron oxide black pigment granules were heated.

2. A process as claimed in claim 1, characterized in that heating is carried out at 400 to 800°C and preferably at 500 to 700°C in a weakly reducing, inert or weakly oxidizing atmosphere.

3. A process as claimed in claim 1 or 2, characterized in that the iron oxide black pigment suspension has a solids content of 50 to 75% by weight.

4. A process as claimed in one or more of claims 1 to 3, characterized in that the iron oxide black pigment suspension contains thermally unstable organic compounds.

5. A process as claimed in claim 4, characterized in that the thermally unstable organic compounds are ammonium salts of polyacrylic acid and are added in quantities of 0.1 to 1% by weight.

6. A process as claimed in one or more of claims 1 to 5, characterized in that the granules are formed and heated in a single process step, preferably in a hot gas spray reactor.

7. A process as claimed in one or more of claims 1 to 5, characterized in that the granules are formed and heated in two separate process steps, the granules preferably being formed in a spray dryer and heated in a rotary kiln.

8. A process as claimed in claim 7, characterized in that the granules are formed in a spray dryer via a one-component nozzle.

9. Iron oxide black pigment granules obtainable by the process claimed in any of claims 1 to 8.

10. The use of the iron oxide black pigment granules according to any of claims 1 to 9 for pigmenting building materials, particularly concrete.

## Revendications

1. Procédé de préparation de granulés de pigment noir d'oxyde de fer sans dispersants, stables à la manipulation, par atomisation ou pulvérisation de suspensions de pigment noir d'oxyde de fer, caractérisé en ce que les granulés de pigment noir d'oxyde de fer obtenus sont soumis à un recuit.

2. Procédé selon la revendication 1, caractérisé en ce que le recuit est effectué à une température de 400 à 800°C, de préférence de 500 à 700°C, sous atmosphère faiblement réductrice, inerte ou faiblement oxydante.

3. Procédé selon l'une des revendications 1 ou 2, caractérisé en ce que la suspension de pigment noir d'oxyde de fer présente une teneur en substance solide de 50 à 75 % en poids.

4. Procédé selon l'une ou plusieurs des revendications 1 à 3, caractérisé en ce que la suspension de pigment noir d'oxyde de fer contient des composés organiques thermiquement instables.

5. Procédé selon la revendication 4, caractérisé en ce que les composés organiques thermiquement instables sont des sels d'ammonium de l'acide polyacrylique et sont introduits en une quantité de 0,1 à 1 % en poids.

6. Procédé selon l'une ou plusieurs des revendications 1 à 5, caractérisé en ce qu'on effectue la granulation et le recuit en une étape de procédé, de préférence dans un réacteur de pulvérisation à gaz chauds.

7. Procédé selon l'une ou plusieurs des revendications 1 à 5, caractérisé en ce qu'on effectue la granulation et le recuit en deux étapes de procédé séparées, de préférence la granulation dans un séchoir par pulvérisation et le recuit dans un four tubulaire rotatif.

8. Procédé selon la revendication 7, caractérisé en ce que la granulation se fait dans un séchoir par pulvérisation par l'intermédiaire d'une buse à un constituant.

9. Granulés de pigment noir d'oxyde de fer qui peuvent être obtenus selon l'une ou plusieurs des revendications 1 à 8.

10. Application des granulés de pigment noir d'oxyde de fer selon l'une ou plusieurs des revendications 1 à 9 pour la coloration de matériaux de construction, en particulier de béton.